# EUROPEAN PATENT SPECIFICATION

(11) **EP 1 317 847 B1**
(45) Date of publication and mention of the grant of the patent: **17.11.2010**
(21) Application number: 01949477.2
(22) Date of filing: 09.07.2001
(51) Int. Cl.: H04N 1/00

(54) **METHOD AND APPARATUS FOR PRODUCING PICTURES WITHIN A TEXT DISPLAY OF A MOBILE DEVICE**
VERFAHREN UND VORRICHTUNG ZUR ERZEUGUNG VON BILDERN IN EINER TEXTANZEIGE EINES MOBILEN GERÄTS
PROCEDE ET APPAREIL PERMETTANT DE PRODUIRE DES IMAGES DANS L'AFFICHAGE DE TEXTE D'UN DISPOSITIF MOBILE

(30) Priority: 21.07.2000 US 219917 P; 06.10.2000 US 684702
(43) Date of publication of application: 11.06.2003
(73) Proprietor: Telefonaktiebolaget LM Ericsson (publ), 164 83 Stockholm (SE)
(72) Inventor: UNRUH, Erland, S-217 59 Malmö (SE)
(74) Representative: O'Connell, David Christopher
(86) International application number: PCT/EP2001/007861
(87) International publication number: WO 2002/009413

(56) References cited:
- EP-A1- 0 646 900
- EP-A1- 0 700 197

## Description

### BACKGROUND OF THE INVENTION

### Technical Field of the Invention

The present invention relates generally to mobile device displays, and more particularly, to the display of pictures with text within a mobile device display.

### Description of Related Art

As the use of mobile devices becomes more prevalent within the marketplace, the various functionalities offered by mobile devices have greatly expanded. The display of e-mail messages and surfing the Internet using WAP protocols are only some of the applications that are now being performed by mobile devices. As the number of applications and uses for mobile devices increases, the requirements desired from the display of the mobile terminal have increased accordingly.

Wherein previously only the display of simple text messages was required by the displays of mobile devices, increased uses of services such as e-mail and web-browsing have created a need for the mobile device display to provide both text and pictorial information upon the display. This creates quite a problem due to the complexity inherent in the general nature of display of text with pictures or pictures alone. This arises in large part from the limited resources available in a mobile device with respect to memory and CPU computing power. Therefore, a need exists for a manner to more efficiently display pictures within the display of a mobile device.

WILT A. J.: "DESIGN AND EVOLUTION OF THE A72 DIGITAL CHARACTER GENERATOR", SMPTE JOURNAL, SMPTE INC. SCARSDALE N.Y USA, ISSN 0036-1682, volume 101, number 12, 01.12.1992, pages 842-849 discloses providing text and graphics for broadcasting by using bitmap images of characters or icons. Furthermore, it also discloses that full-colour icons may be captured from a camera or other similar device, and such an icon is stored as multiple individual icons that correspond to red, green, blue and transparency values of the full-colour icon.

### SUMMARY OF THE INVENTION

Aspects of the present invention may be found in the appendent independent claims 1 and 8, to which reference should now be made. Embodiments of the present invention may be found in the appendent dependent claims.

### BRIEF DESCRIPTION OF THE DRAWINGS

A more complete understanding of the method and apparatus of the present invention may be obtained by reference to the following Detailed Description when taken in conjunction with the accompanying Drawings wherein:
FIGURE 1, is a block diagram illustrating a mobile device configured to display both pictures and text upon the display of the mobile device according to the present invention;
FIGURE 2 is a functional block diagram of the system for displaying pictures within the mobile device;
FIGURE 3 illustrates the process of the present invention; and
FIGURE 4 is a flow diagram illustrating the process performed by the system of FIGURE 2.

### DETAILED DESCRIPTION

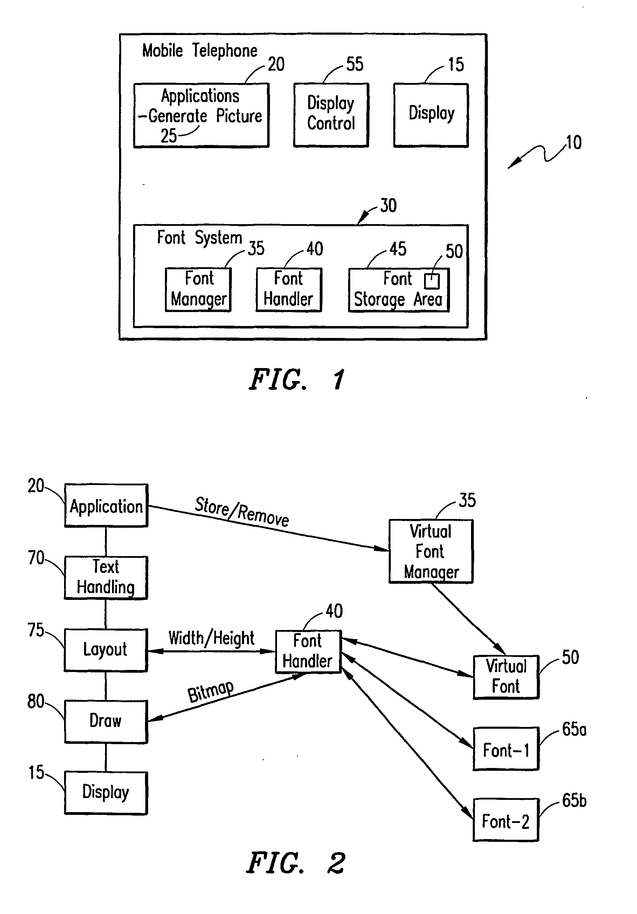

Referring now to the drawings, and more particular to FIGURE 1, there is illustrated a mobile device 10 implementing the functionality necessary to display pictures within a display 15 of the mobile device 10. The mobile device 10 may comprise a mobile telephone, laptop computer, PDA, pager, or any other mobile electronic device having a display. Applications 20 within the mobile device 10 include picture generation functionalities 25 providing the ability to generate bitmap images of pictures and modify fonts within the font system 30 of the mobile device in run time. Alternatively, the bitmap images could be directly input to mobile terminal via an external port (not shown), or downloaded from an external network such as the Internet. A bitmap defines a display space and the color for each pixel or "bit" in the display space. GIF and a JPEG are examples of graphic image file types that contain bitmaps. A bitmap does not need to contain a bit of color-coded information for each pixel on every row. It only needs to contain information indicating a new color as the display scans along a row. Thus, an image with much solid color will tend to require a small bit map.

The font system 30 includes a font manager 35, font handler 40 and font storage area 45. The font manager 35 receives instructions from the picture generating functionality 25 in order to store a bitmap of a provided picture. Within existing mobile devices, most font systems 30 include a number of fonts which are stored within the font storage area 45. Each character of a font is individually stored within the font storage area 45. Each of these stored characters comprises a stored bitmap image of the character. Within the present invention, the font manager 35 receives a provided bitmap from the picture generating functionality 25 and stores this provided bitmap within the font storage area 45. The stored bitmap 50 of the picture is referred to as a virtual font. The stored bitmap 50 for the picture has a character value associated therewith by the font manager 35.

One example of a system for identifying font characters is the Unicode system. The Unicode standard is the universal character and coding standard used for the recordation of text for computer processing. The Unicode system provides a format wherein a unique number is associated with every character of virtually any language. The standard uses a default 16 bit encoding that provides code points for more than 65,000 characters. The Unicode standards also provides for an extension mechanism that enables encoding for as many as one million additional characters without the use of complex modes or escape codes. The standard also reserves the 6,400 code values for private use in the normal format and 131,068 code values for private use within the extended coding scheme. These areas reserved for private use might be utilized for storing codes for bitmap images of pictures rather than for characters according to the present invention.

The character values provided by the font manager 35 may utilize the full range of characters in the font (for Unicode this range is roughly 0-65535) or use a restricted code range within a "private area". The advantage of using a private area is that text handling routines implemented within the font manager 35 normally have different code ranges categorized with characters having characteristics that a picture would not have. By selecting a private area for designation of the picture fonts, the private area may be free of any undesired characteristics.

By providing the associated character value, the picture stored within the font storage area 45 may be retrieved by the font handler 40 and provided to the display control 55 for generation of the picture on the display 15. The font handler 40 retrieves the required fonts from font storage area 45 and provides them to the display 55. The font handler 40 must have the capability to handle different sized characters (width, height, proportional text). The font handler 40 accesses the stored bitmaps 50 of the pictures within the font storage area 45 responsive to the character values described previously.

Referring now to FIGURE 2, wherein there is provided an illustration of the functional operation of the present invention with the mobile device. The application 20 within the mobile device 10 can either store or remove pictures from the font storage area 45 (FIGURE 1) by accessing the font manager 35. The font manager 35 stores the bitmap images for the virtual font 50 along with other fonts 65 for normal text characters within the font storage area 45.

The applications 20 may request the display of the stored virtual font 50 by accessing the text handling routines 70. The text handling routines 70 process the various character values provided by the applications 20 and forward these to the layout routine 75. The layout routine 75 accesses the font handler 40 to request that the particular font identified by the character value be provided to the layout routine 75. The layout routine 75 will also configure the width and height of the desired font. The layout routine 75 provides the layout (i.e., orientation, spacing, etc.) for the indicated text and/or pictures and provides these to the drawing routine 80. The drawing routine 80 uses the information from the layout routine 75 and the received bitmap images of the requested fonts from the font handler 40 to draw the text and/or pictures requested by the applications 20. The drawing routine 80 forwards the rendered information to the display 15 to be displayed to a user. Likewise, the application 20 may request removal of a font 50. In this case the request for removal is merely forwarded to the font handler and the font manager 35 removes the bitmap from the font storage area 45.

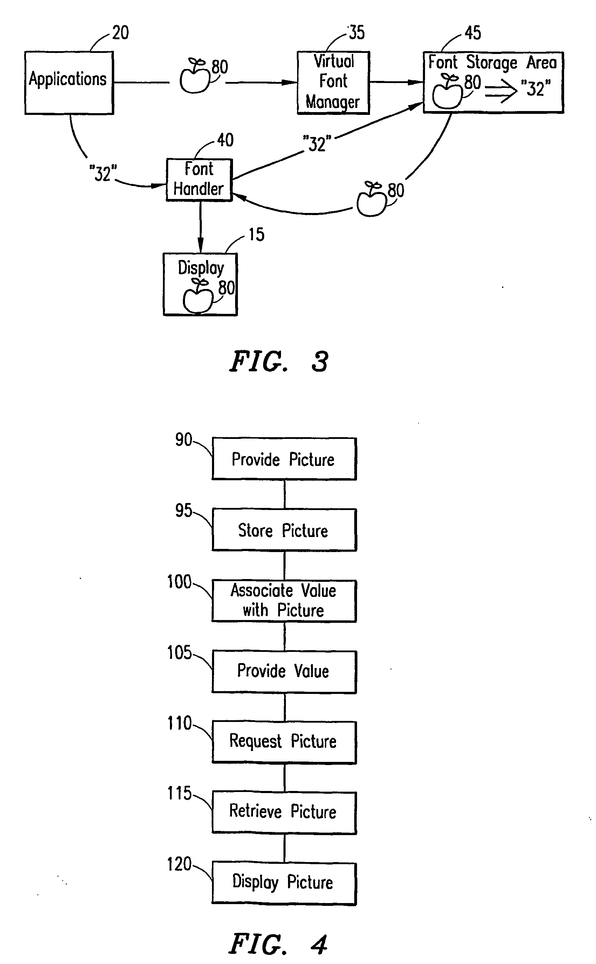

Referring now to FIGURE 3, there is provided a general illustration of the above described process. A picture 80 of an apple is provided from the applications 20 to the virtual font manager 35 which stores this information within the font storage area 45. The character value of "32" is associated with the picture of the apple. The applications 20 next requests display of the apple picture 80 by providing the character value "32" to the font handler 40 and the font handler 40 provides the bitmap image of the stored apple which may then be displayed on display screen 15.

Referring now to FIGURE 4, there is illustrated a flow diagram of the process of the present invention. Mobile device application 20 provides at step 90 a bitmap picture to the font manager 35. The font manager 35 stores at step 95 the provided picture as a virtual font character 50 within the font storage area 45. The font manager 35 also associates at step 100 a particular character value with the stored bitmap picture so that the bitmap picture may be recalled at a later time. The virtual font manager 35 notifies the applications at 105 of the generated character value so that they may access the stored bitmap at a later time. The applications 20 provide at step 110 the character value associated with the bitmap picture in order to request its display. Responsive to the provided character value, the bitmap for the indicated virtual font 50 is retrieved by the font handler 40 from the font storage area 45 at step 115 and is provided to the display 15 such that the picture can be generated at step 120.

Using the above described system and method, pictures may be displayed utilizing already existing text handling routines within the mobile device. The pictures are able to enter the text handling function disguised as normal characters such that the system works no differently that when displaying normal text. Likewise, the pictures will automatically end up mixed with text since the picture is merely displayed as another character.

The previous description is of a preferred embodiment for implementing the invention, and the scope of the invention should not necessarily be limited by this description. The scope of the present invention is instead defined by the following claims.

## Claims

1. A method of generating pictures on a display (15) of a mobile device (10) comprising the steps of:
generating a bitmap image of a picture within an application of the mobile device (10);
forwarding the generated bitmap image to a font manager (35) ; **characterised by** the steps of :
storing (95) the bitmap image of a picture in a text font storage area (45);
associating (100) a character value with the stored bitmap image (50);
retrieving (115) the stored bitmap image (50) of the picture using said character value; and
generating the picture on the display (15) of the mobile device (10) using the retrieved bitmap image.

2. The method of Claim 1, further comprising the steps of:
generating a request for removal of the stored bitmap image (50) of the picture; and
removing the stored bitmap image (50) of the picture from the text font storage area (45).

3. The method of Claim 1, wherein the step of retrieving the stored bitmap (115) further comprises the step of providing the character value from an application within the mobile device (10) to a font handling routine.

4. The method of Claim 1, wherein the character value comprises a character value associated with a font.

5. The method of Claim 1, further comprising the steps of displaying (120) text along with the picture.

6. The method of Claim 5, wherein the step of displaying text (120) further comprises the step of:
providing at least one second character value associated with a text character;
retrieving (115) the text character responsive to the at least one second character value; and
generating the text character on the display (15).

7. The method of Claim 1, wherein the mobile device (10) comprises a mobile telephone.

8. A mobile device (10) capable of displaying (120) a picture on a display (15), comprising:
at least one application for generating a bitmap image of the picture;
a display (15) for displaying (120) the bitmap image of the picture; **characterised in that** it further comprises
a font system (30) for storing (95) the bitmap image of the picture in a font storage area (45) and associating (100) a character value therewith and for retrieving and providing the bitmap image to the display (15) responsive to the character value.

9. The mobile device (10) of Claim 8, wherein the font system (30) further comprises:
a font manager (35) for associating (100) the character value with the stored bitmap image (50); and
a font handler (40) for retrieving (115) the bitmap image from the font storage area (45) responsive to the character value.

10. The mobile device (10) of Claim 9, wherein the font handler (40) further retrieves a second bitmap image associated with a text character from the font storage area responsive to a second character value.

11. The mobile device (10) of Claim 8, further including at least one application for generating a request to remove the stored bitmap image (50).

12. The mobile device (10) of Claim 8, wherein the font system (30) removes the bitmap image responsive to the request to remove.

13. The mobile device (10) of Claim 8, wherein the font system (30) further stores (95) bitmap images of text characters and associates character values therewith.

14. The mobile device (10) of Claim 8, wherein the character value comprises a character value normally associated with a text font.

15. The mobile device (10) of Claim 8, wherein the mobile device comprises a mobile telephone.

## Patentansprüche

1. Verfahren des Erzeugens von Abbildungen auf einer Anzeige (15) eines Mobilgeräts (10), die Schritte umfassend:
Erzeugen eines Bitmap-Bildes eines Abbilds innerhalb einer Anwendung des Mobilgeräts (10);
Weiterleiten des erzeugten Bitmap-Bildes zu einem Font-Verwalter (35); **gekennzeichnet durch** die Schritte:
Speichern (95) des Bitmap-Bildes eines Abbilds in einem Text-Font-Speicherbereich (45);
Assoziieren (100) eines Schriftzeichenwerts mit dem gespeicherten Bitmap-Bild (50);
Abrufen (115) des gespeicherten Bitmap-Bildes (50) des Abbilds unter Verwendung des Schriftzeichenwerts; und
Erzeugen des Abbilds auf der Anzeige (15) des Mobilgeräts (10) unter Verwendung des abgerufenen Bitmap-Bildes.

2. Verfahren nach Anspruch 1, ferner umfassend die Schritte:
Erzeugen einer Anfrage zum Entfernen des gespeicherten Bitmap-Bildes (50) des Abbilds; und
Entfernen des gespeicherten Bitmap-Bildes (50) des Abbilds von dem Text-Font-Speicherbereich (45).

3. Verfahren nach Anspruch 1, wobei der Schritt des Abrufens des gespeicherten Bitmaps (115) ferner den Schritt umfasst des Bereitstellens des Schriftzeichenwerts von einer Anwendung innerhalb des Mobilgeräts (10) zu einer Font-Bearbeitungsroutine.

4. Verfahren nach Anspruch 1, wobei der Schriftzeichenwert einen Schriftzeichenwert, assoziiert mit einem Font, umfasst.

5. Verfahren nach Anspruch 1, ferner umfassend den Schritt des Anzeigens (120) von Text zusammen mit dem Abbild.

6. Verfahren nach Anspruch 5, wobei der Schritt des Anzeigens von Text (120) ferner die Schritte umfasst:
Bereitstellen mindestens eines zweiten Schriftzeichenwerts assoziiert mit einem Textschriftzeichen;
Abrufen (115) des Textschriftzeichens, welches ansprechend ist auf mindestens einen zweiten Schriftzeichenwert; und
Erzeugen des Textschriftzeichens auf der Anzeige (15).

7. Verfahren nach Anspruch 1, wobei das Mobilgerät (10) ein Mobiltelefon umfasst.

8. Mobilgerät (10), geeignet zum Anzeigen (120) eines Abbilds einer Anzeige (15), umfassend:
mindestens eine Anwendung zum Erzeugen eines Bitmap-Bildes des Abbilds;
eine Anzeige (15) zum Anzeigen (120) des Bitmap-Bildes des Abbilds; **dadurch gekennzeichnet, dass** es ferner umfasst:
ein Fontsystem (30) zum Speichern (95) des Bitmap-Bilds des Abbilds in einem Fontspeicherbereich (45) und Assoziieren (100) eines Schriftzeichenwerts damit und zum Abrufen und Bereitstellen des Bitmap-Bildes zu der Anzeige (15), das ansprechend ist auf den Schriftzeichenwert.

9. Mobilgerät (10) nach Anspruch 8, wobei das Fontsystem (30) ferner umfasst:
einen Font-Verwalter (35) zum Assoziieren (100) des Schriftzeichenwerts mit dem gespeicherten Bitmap-Bild (50); und
einen Font-Handler (40) zum Abrufen (115) des Bitmap-Bilds von dem Fontspeicherbereich (45), das ansprechend ist auf den Schriftzeichenwert.

10. Mobilgerät (10) nach Anspruch 9, wobei der Font-Handler (40) ferner ein zweites Bitmap-Bild abruft, das assoziiert ist mit einem zweiten Textschriftzeichen, von dem Fontspeicherbereich, das ansprechend ist auf den zweiten Schriftzeichenwert.

11. Mobilgerät (10) nach Anspruch 8, ferner beinhaltend mindestens eine Anwendung zum Erzeugen einer Anfrage, um das gespeicherte Bitmap-Bild (50) zu entfernen.

12. Mobilgerät (10) nach Anspruch 8, wobei das Fontsystem (30) das Bitmap-Bild entfernt, das ansprechend ist die Anfrage des Entfernens. ?

13. Mobilgerät (10) nach Anspruch 8, wobei das Fontsystem (30) ferner Bitmap-Bilder von Textschriftzeichen speichert (95) und Schriftzeichenwerte damit assoziiert.

14. Mobilgerät (10) nach Anspruch 8, wobei der Schriftzeichenwert einen Schriftzeichenwert umfasst, der normalerweise mit einem Textschriftzeichen assoziiert ist.

15. Mobilgerät (10) nach Anspruch 8, wobei das Mobilgerät ein Mobiltelefon umfasst.

## Revendications

1. Procédé de production d'images sur un écran (15) d'un dispositif mobile (10) comprenant les étapes consistant :
à engendrer une image en mode point d'une image à l'intérieur d'une application du dispositif mobile (10) ;
à acheminer l'image en mode point engendrée jusqu'à un gestionnaire (35) de polices de caractères ;
**caractérisé par** les étapes consistant :
à mémoriser (95) l'image en mode point d'une image dans une zone (45) de mémorisation de polices de caractères de texte ;
à associer (100) une valeur de caractère à l'image en mode point (50) mémorisée ;
à récupérer (115) l'image en mode point (50) mémorisée de l'image en utilisant ladite valeur de caractère ; et
à engendrer l'image sur l'écran (15) du dispositif mobile (10) en utilisant l'image en mode point récupérée.

2. Procédé selon la revendication 1, comprenant en outre les étapes consistant :
à engendrer une demande de retrait de l'image en mode point (50) mémorisée de l'image ; et
à retirer, de la zone (45) de mémorisation de polices de caractères de texte, l'image en mode point (50) mémorisée de l'image.

3. Procédé selon la revendication 1, dans lequel l'étape de récupération (115) de l'image en mode point mémorisée comprend en outre l'étape de délivrance de la valeur de caractère par une application à l'intérieur du dispositif mobile (10) à un sous-programme de manipulation de polices de caractères.

4. Procédé selon la revendication 1, dans lequel la valeur de caractère comprend une valeur de caractère associée à une police de caractères.

5. Procédé selon la revendication 1, comprenant en outre l'étape d'affichage (120) de texte conjointement avec l'image.

6. Procédé selon la revendication 5, dans lequel l'étape d'affichage (120) de texte comprend en outre l'étape consistant :
à délivrer au moins une deuxième valeur de caractère associée à un caractère de texte ;
à récupérer (115) le caractère de texte en réponse à l'au moins une deuxième valeur de caractère ; et
à engendrer le caractère de texte sur l'écran (15).

7. Procédé selon la revendication 1, dans lequel le dispositif mobile (10) comprend un téléphone mobile.

8. Dispositif mobile (10) capable d'afficher (120) une image sur un écran (15), comprenant :
au moins une application destinée à engendrer une image en mode point de l'image ;
un écran (15) destiné à afficher (120) l'image en mode point de l'image ;
**caractérisé en ce qu'**il comprend en outre :
un système (30) de polices de caractères destiné à mémoriser (95) l'image en mode point de l'image dans une zone (45) de mémorisation de polices de caractères et à lui associer (100) une valeur de caractère et à récupérer et à délivrer à l'écran (15) l'image en mode point en réponse à la valeur de caractère.

9. Dispositif mobile (10) selon la revendication 8, dans lequel le système (30) de police de caractères comprend en outre :
un gestionnaire (35) de polices de caractères destiné à associer (100) la valeur de caractère à l'image en mode point (50) mémorisée ; et
un manipulateur (40) de polices de caractères destiné à récupérer (115) l'image en mode point dans la zone (45) de mémorisation de polices de caractères en réponse à la valeur de caractère.

10. Dispositif mobile (10) selon la revendication 9, dans lequel, en réponse à une deuxième valeur de caractère, le manipulateur (40) de polices de caractères récupère en outre, dans la zone de mémorisation de polices de caractères, une deuxième image en mode point associée à un caractère de texte.

11. Dispositif mobile (10) selon la revendication 8, incluant en outre au moins une application destinée à engendrer une demande de retrait de l'image en mode point (50) mémorisée.

12. Dispositif mobile (10) selon la revendication 8, dans lequel le système (30) de polices de caractères retire l'image en mode point en réponse à la demande de retrait.

13. Dispositif mobile (10) selon la revendication 8, dans lequel le système (30) de polices de caractères mémorise en outre (95) des images en mode point de caractères de texte et leur associe des valeurs de caractère.

14. Dispositif mobile (10) selon la revendication 8, dans lequel la valeur de caractère comprend une valeur de caractère normalement associée à une police de caractères de texte.

15. Dispositif mobile (10) selon la revendication 8, dans lequel le dispositif mobile comprend un téléphone mobile.
